# EUROPÄISCHE PATENTSCHRIFT

(11) **EP 1 321 354 B1**
(45) Veröffentlichungstag und Bekanntmachung des Hinweises auf die Patenterteilung: **02.07.2008**
(21) Anmeldenummer: 02026144.2
(22) Anmeldetag: 25.11.2002
(51) Int. Cl.: B62D 55/13, B62D 55/12

(54) **Turasrad für ein Kettenlaufwerk**
Sprocket for chain drive
Roue de barbotin pour chenille

(30) Priorität: 20.12.2001 DE 10163968
(43) Veröffentlichungstag der Anmeldung: 25.06.2003
(73) Patentinhaber: Kässbohrer Geländefahrzeug AG, 88471 Laupheim (DE)
(72) Erfinder: Kanzler, Helmut, 89269 Vöhringen (DE)
(74) Vertreter: Patentanwälte Ruff, Wilhelm, Beier, Dauster & Partner

(56) Entgegenhaltungen:
- EP-A- 0 384 567
- DE-A- 4 444 982
- US-A- 3 996 814
- US-A- 4 752 281
- US-A- 5 190 363

## Beschreibung

Die Erfindung betrifft ein Turasrad für ein Kettenlaufwerk eines Kettenfahrzeugs mit einer Stirnverzahnung, auf der im Betrieb des Kettenlaufwerks Führungselemente einer Kette abrollen, wobei mit dem Abrollbereich der Führungselemente in Kontakt befindliche Teilabschnitte der Stirnverzahnung als lösbare Austauschteile gestaltet sind.

Ein derartiges Turasrad ist, gemäß dem Oberbegriff des Anspruchs 1, aus der US-A-4 752 281 bekannt. Das Turasrad besitzt austauschbare Zahnköpfe. Die gesamte Verzahnung des Turasrades ist durch austauschbare Zähne bzw. Zahnköpfe gestaltet.

Turasräder für Kettenlaufwerke von Kettenfahrzeugen sind im übrigen allgemein bekannt. Ein Kettenlaufwerk für ein Kettenfahrzeug, insbesondere für ein Pistenpflegefahrzeug, weist auf jeder Laufwerksseite jeweils ein Turasrad auf, das als Antriebsrad für die jeweilige Kette jeder Laufwerkseite fungiert. Das jeweilige Turasrad ist sternförmig oder zahnradartig gestaltet und wird durch eine Antriebshydraulik angetrieben. Eine Stirnverzahnung des sternförmigen oder zahnradartigen Turasrades steht formschlüssig in Eingriff mit korrespondierenden Führungselementen der jeweiligen Kette, die um das Turasrad umläuft. Hierzu ist das Turasrad vorzugsweise als erste oder als letzte Achse des Kettenlaufwerkes positioniert, um im Umlenkbereich der Kette angeordnet zu sein. Aufgrund des formschlüssigen Eingriffes und des Abrollens der Führungselemente der Kette im Bereich der Stirnverzahnung des Turasrades sind das Turasrad und/oder die Führungselemente der Kette Verschleiß ausgesetzt. Hierdurch kann Laufkomfort und -funktion der Kette in Mitleidenschaft gezogen werden.

Aufgabe der Erfindung ist es, ein Turasrad der eingangs genannten Art zu schaffen, das über einen langen Zeitraum eine einwandfreie und komfortable Funktion des Kettenlaufwerkes ermöglicht.

Diese Aufgabe wird dadurch gelöst, dass die Austauschteile in Zahngrundbereichen zwischen benachbarten Zahnköpfen angeordnet sind. Die Erfindung geht von der Erkenntnis aus, dass erhöhte Verschleißbereiche sich in den Zahngrundbereichen der Stirnverzahnung befinden. Die Zahnköpfe werden demgegenüber zumindest nahezu nicht beansprucht. Die Stirnverzahnung des Turasrades wird somit im verschleißanfälligen Abrollbereich der Führungselemente, d.h. umlaufend im Eingriffsbereich dieser Führungselemente, mit Austauschteilen versehen. Diese Austauschteile können bei Verschleiß ausgewechselt werden, ohne dass das gesamte Turasrad ausgetauscht werden muss. Hierdurch ist bei einer Erneuerung der Lauffläche der Stirnverzahnung jedes Turasrades lediglich ein erheblich reduzierter Kosten- und Zeitaufwand erforderlich. Die Austauschteile sind vorzugsweise aus einem verschleißfesten Material.

In Ausgestaltung der Erfindung sind die Austauschteile als separate Einzelteile gestaltet. Vorzugsweise sind alle Austauschteile identisch gestaltet, so dass lediglich eine einzelne Werkzeugform zur Herstellung der Austauschteile benötigt wird.

In weiterer Ausgestaltung der Erfindung ist wenigstens ein Befestigungsmittel zur Fixierung der Austauschteile an der Stirnverzahnung vorgesehen. Die Austauschteile können jeweils durch separate Befestigungsmittel oder auch durch ein einzelnes, gemeinsames Befestigungsmittel im Bereich der Stirnverzahnung fixiert sein.

In weiterer Ausgestaltung der Erfindung ist als Befestigungsmittel ein alle Austauschteile gemeinsam fixierender Sicherungskranz vorgesehen, der lösbar mit dem Turasrad verbunden ist. Der Sicherungskranz steht mit allen Austauschteilen in Wirkverbindung. Vorzugsweise sichert der Sicherungskranz die Austauschteile gegen einen gegenüberliegenden, turasradfesten Anschlag.

In weiterer Ausgestaltung der Erfindung sind die Austauschteile achsparallel zu einer Drehachse des Turasrades in die Zahngrundbereiche einschiebbar. Vorzugsweise schließen die Oberflächen der Austauschteile in eingeschobener Funktionsposition bündig und fluchtend mit den Oberflächen der benachbarten Zahnköpfe ab. Die Stirnverzahnung ist somit in dem Zahngrundbereich zwischen jeweils zwei benachbarten Zahnköpfen ausgespart, so dass das jeweilige Austauschteil formschlüssig achsparallel zwischen die benachbarten Zahnkopfabschnitte einschiebbar ist.

In weiterer Ausgestaltung der Erfindung ist ein in Einschubrichtung wirksamer Positionieranschlag für jedes Austauschteil vorgesehen. Dieser Positionieranschlag ist vorzugsweise - von der Einschubseite her gesehen - rückseitig der jeweiligen Aussparung vorgesehen, so dass jedes Austauschteil achsparallel zur Drehachse bis zu dem Positionieranschlag einschiebbar ist und in dieser Funktionsposition allseits mit entsprechend benachbarten Turasradabschnitten wie Zahnkopfabschnitte, Turasradvorderseite, Positionieranschlag und ähnlichem bündig abschließt.

In weiterer Ausgestaltung der Erfindung sind die Austauschteile einstückig miteinander verbunden. Vorzugsweise sind die Austauschteile einstückig mit einem umlaufenden Kranz verbunden, der koaxial auf das Turasrad derart aufschiebbar ist, dass die Austauschteile beim Aufschieben gleichzeitig in die jeweiligen Aussparungen an der Stirnverzahnung eintauchen.

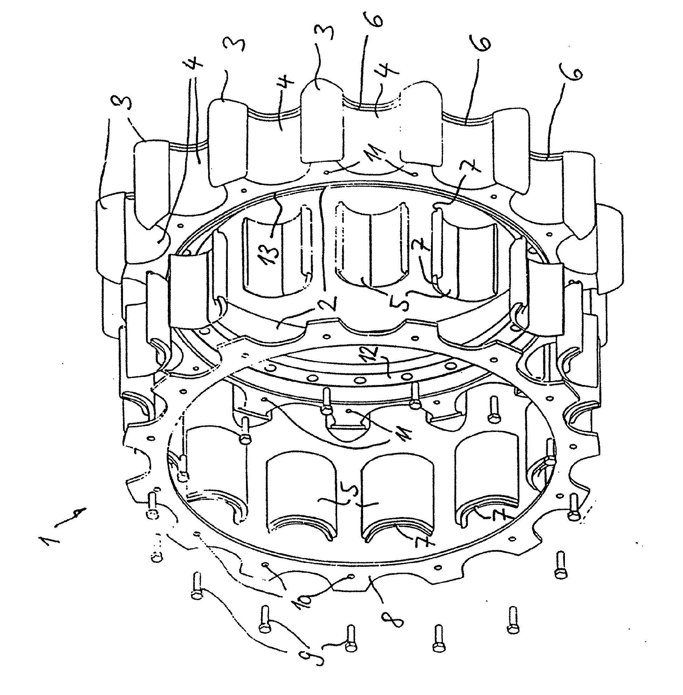

Weitere Vorteile und Merkmale der Erfindung ergeben sich aus den Ansprüchen. Nachfolgend ist ein bevorzugtes Ausführungsbeispiel der Erfindung beschrieben und anhand der einzigen Zeichnung ergänzend dargestellt.

Die einzige Zeichnung zeigt eine perspektivische Explosionsdarstellung einer Ausführungsform eines erfindungsgemäßen Turasrades für ein Kettenlaufwerk eines Pistenpflegefahrzeugs.

Ein Kettenfahrzeug in Form eines Pistenpflegefahrzeuges für Schneepisten weist in grundsätzlich bekannter Weise ein Kettenlaufwerk auf, das auf jeder Laufwerkseite mit einer Kette versehen ist, die zur Fortbewegung auf dem entsprechenden Untergrund dient. Jede Kette ist auf den gegenüberliegenden Laufwerkseiten mittels mehrerer Räder geführt. Eines dieser Räder, vorzugsweise die - in Fahrtrichtung gesehen - letzte oder erste Radachse, ist zum Antrieb der jeweiligen Kette vorgesehen und als Turasrad 1 gestaltet. Das entsprechende Turasrad für jede Kette ist im Umlenkbereich der Kette derart positioniert, dass die Kette etwa die Hälfte des Umfangs des Turasrades 1 umschließt.

Um einen formschlüssigen Eingriff der Kette in das Turasrad und damit eine sichere und gleichmäßige Kraftübertragung der Antriebskraft des Turasrades auf die Kette zu erzielen, ist das Turasrad 1 an seinem Außenumfang mit einer Stirnverzahnung 3 bis 5 versehen, die nachfolgend näher beschrieben wird. Die korrespondierende Kette weist in grundsätzlich bekannter Weise Führungselemente auf, die beim Umlenken der Kette um das Turasrad in die Stirnverzahnung eingreifen und so die formschlüssige Mitnahme der Kette mit der Umdrehung des Turasrades 1 bewirken.

Die Stirnverzahnung des Turasrades 1 weist zum einen eine Vielzahl von Zahnköpfen 3 und zum anderen eine Vielzahl von zwischen den Zahnköpfen liegenden Zahngrundbereichen 4 auf. Die Stirnverzahnung ist ringförmig gestaltet und an ihrem Innenumfang mit einem Ringflansch 12 versehen. Der Ringflansch 12 ist mit einer Vielzahl von nicht näher bezeichneten Befestigungsbohrungen versehen, mittels derer die Stirnverzahnung 3 bis 5 und der Ringflansch 12 an einer Radnabe des Turasrades 1 befestigt werden können.

Die Zahnköpfe 3 der Stirnverzahnung sind haubenförmig gestaltet und von den Zahngrundbereichen 4 stufenartig abgesetzt. Dadurch ergibt sich in jedem Zahngrundbereich 4 eine rinnenartige Aussparung, die jeweils an der Oberseite ihrer Flanken durch den jeweiligen stufenförmigen Absatz des haubenartigen Zahnkopfes 3 begrenzt ist.

In die Aussparungen der Zahngrundbereiche 4 sind schalenartige Austauschteile 5 einsetzbar. Die Austauschteile 5 sind aus einem verschleißfesten Material, vorzugsweise aus einem verschleißfesten Kunststoff gestaltet. Sie sind in ihrer Form derart ausgeführt, dass sie sich flächig in die rinnenförmigen Aussparungen der Zahngrundbereiche 4 einbetten und mit ihrer Oberfläche bündig und fluchtend an die Oberfläche der benachbarten Zahnköpfe 3 anschließen. Nach dem Einsetzen der Austauschteile 5 in die Zahngrundbereiche 4 ergibt sich somit zwischen den Oberflächen der Zahnköpfe 3 und den Oberflächen der Austauschteile ein stufenloser, fluchtender Übergang.

Die Austauschteile 5 sind mit geringem Spiel achsparallel zu einer Drehachse des Turasrades 1 von einer gemeinsamen Vorderseite her in die entsprechenden Aussparungen der Zahngrundbereiche 4 einschiebbar. Rückseitig ist jedem Zahngrundbereich 4 ein Positionieranschlag 6 in Form einer Stegkante zugeordnet, die einstückig oder in anderer Art und Weise fest mit der Stirnverzahnung verbunden ist. Jedes Austauschteil 5 weist sowohl im Bereich seiner vorderen als auch im Bereich seiner rückseitigen Stirnkante jeweils einen Anlaufsteg 7 auf. Jedes Austauschteil 5 ist symmetrisch gestaltet, so dass es von beiden Stirnseiten her in gleicher Weise in die entsprechende Aussparung eingeschoben werden kann. Der jeweilige Anlaufsteg 7 überlappt in eingeschobener Funktionsposition des Austauschteiles 5 den rückseitigen Positionieranschlag 6 des zugehörigen Zahngrundbereiches 4.

Auf der dem Positionieranschlag 6 gegenüberliegenden Vorderseite der Stirnverzahnung ist ein Sicherungskranz 8 vorgesehen, der eine korrespondierende Stirnverzahnungskontur aufweist und die Austauschteile 5 auf der Vorderseite der Stirnverzahnung axial sichert und fixiert. Der Sicherungskranz 8 weist einen Innenumfang auf, dessen Durchmesser auf eine Ringschulter 13 im Bereich der Stirnverzahnung derart abgestimmt ist, dass der Sicherungskranz 8 im aufgesteckten Funktionszustand diese Ringschulter 13 bündig umgreift. Auch die haubenförmigen Zahnköpfe 3 ragen um einen Betrag zur Vorderseite hin axial ab, der der Dicke des Sicherungskranzes 8 entspricht. Zahnkopfkonturen des Sicherungskranzes 8 sind derart auf die Teilung und die Gestalt der haubenförmigen Zahnköpfe 3 abgestimmt, dass diese bündig mit den jeweils überstehenden Abschnitten der Zahnköpfe 3 abschließen. Die zwischen den Zahnkopfkonturen liegenden Zahngrundkonturen des Sicherungskranzes 8 sind auf den Krümmungsradius der Anlaufstege 7 der Austauschteile 5 abgestimmt. Die entsprechenden Zahngrundkonturen des Sicherungskranzes 8 bilden somit für jedes Austauschteil 5 eine formschlüssige Axialsicherung in montiertem Zustand.

Zur Montage des Sicherungskranzes 8 sind eine Vielzahl von Befestigungsmitteln in Form von Befestigungsschrauben 9 vorgesehen, die in Gewindebohrungen 11 der vorderen Stirnseite des Turasrades 1 einschraubbar sind. Für die Aufnahme der Befestigungsschrauben 9 sind in dem Sicherungskranz 8 entsprechende Durchtrittsöffnungen 10 vorgesehen.

Für ein Auswechseln der Austauschteile 5 wird in einfacher Weise der Sicherungskranz 8 demontiert und von der Stirnverzahnung axial abgezogen. Anschließend können die Austauschteile 5 von Hand axial aus den entsprechenden Aussparungen der Zahngrundbereiche 4 herausgezogen und durch andere Austauschteile ersetzt werden. Diese anderen Austauschteile werden dann mit dem Sicherungskranz 8 und den Befestigungsschrauben 9 in korrespondierender Weise wieder fixiert.

## Patentansprüche

1. Turasrad (1) für ein Kettenlaufwerk eines Kettenfahrzeugs mit einer Stirnverzahnung (3 bis 5), auf der im Betrieb des Kettenlaufwerkes Führungselemente einer Kette abrollen, wobei mit dem Abrollbereich der Führungselemente in Kontakt befindliche Teilabschnitte der Stirnverzahnung als lösbare Austauschteile (5) gestaltet sind, **dadurch gekennzeichnet, dass** die Austauschteile (5) in Zahngrundbereichen (4) zwischen benachbarten Zahnköpfen (3) angeordnet sind.

2. Turasrad nach Anspruch 1, **dadurch gekennzeichnet, dass** die Austauschteile (5) als separate Einzelteile gestaltet sind.

3. Turasrad nach Anspruch 2, **dadurch gekennzeichnet, dass** wenigstens ein Befestigungsmittel (8, 9) zur Fixierung der Austauschteile (5) an der Stirnverzahnung vorgesehen ist.

4. Turasrad nach Anspruch 3, **dadurch gekennzeichnet, dass** das wenigstens eine Befestigungsmittel einen alle Austauschteile (5) gemeinsam fixierenden Sicherungskranz (8) umfasst, der lösbar mit dem Turasrad (1) verbunden ist.

5. Turasrad nach Anspruch 1, **dadurch gekennzeichnet, dass** die Austauschteile (5) achsparallel zu einer Drehachse des Turasrades (1) in die Zahngrundbereiche (4) einschiebbar sind.

6. Turasrad nach Anspruch 5, **dadurch gekennzeichnet, dass** ein in Einschubrichtung wirksamer Positionieranschlag (6) für jedes Austauschteil (5) vorgesehen ist.

7. Turasrad nach Anspruch 1, **dadurch gekennzeichnet, dass** die Austauschteile (5) einstückig miteinander verbunden sind.

## Claims

1. The tumbler wheel (1) for a chain-drive mechanism of a crawler vehicle with spar gearing (3 to 5), on which guiding elements of a chain crawl during operation of the chain-drive mechanism, wherein the partial sections of the spar gearing in contact with the crawling section of the guide elements are formed as detachable replacement parts (5), **characterised in that** the replacement parts (5) are located in the tooth gullet areas (4) between adjacent tooth heads (3).

2. A tumbler wheel according to Claim 1 **characterised in that** the replacement parts (5) are formed as separate single parts.

3. A tumbler wheel according to Claim 2 **characterised in that** at least a fastening means (8, 9) for fixing the replacement parts (5) is provided on the spar gearing.

4. A tumbler wheel according to Claim 3 **characterised in that** the at least one fastening means comprises a common fixing safety rim (8) for all replacement parts (5), which is detachably connected with the tumbler wheel (1).

5. A tumbler wheel according to Claim 1 **characterised in that** the replacement parts (5) are located displaceably axially parallel to a rotary axis of the tumbler wheel (1) in the tooth gullet areas (4).

6. A tumbler wheel according to Claim 5 **characterised in that** a positioning limit stop (6) that acts in the push-in direction is provided for each replacement part (5).

7. A tumbler wheel according to Claim 1 **characterised in that** the replacement parts (5) are connected with one another as a single piece.

## Revendications

1. Roue Turas (1) pour mécanisme de roulement à chenilles équipant un véhicule chenillé, dotée d'une denture frontale (3 à 5) sur laquelle roulent des éléments de guidage d'une chenille lorsque le mécanisme de roulement à chenilles fonctionne, les segments de la denture frontale qui entrent en contact avec la zone de roulement des éléments de guidage étant configurés en pièces de rechange (5) détachables, **caractérisée en ce que** lesdites pièces de rechange (5) sont agencées dans les fonds de dent (4) situés entre les têtes de dent (3) voisines.

2. Roue Turas selon la revendication 1, **caractérisée en ce que** les pièces de rechange (5) sont configurées comme des pièces détachées à part.

3. Roue Turas selon la revendication 2, **caractérisée en ce qu'**au moins un moyen de fixation (8, 9) a été prévu pour immobiliser les pièces de rechange (5) contre la denture frontale.

4. Roue Turas selon la revendication 3, **caractérisée en ce qu'**au moins un moyen de fixation comprend une couronne de retenue (8) immobilisant ensemble toutes les pièces de rechange (5), laquelle couronne est reliée de façon détachable à la roue Turas (1).

5. Roue Turas selon la revendication 1, **caractérisée en ce que** les pièces de rechange (5) sont insérables, en parallélisme axial avec un axe rotatif de la roue Turas (1), dans les zones de fond de dent (4).

6. Roue Turas selon la revendication 5, **caractérisée en ce qu'**à été prévue, pour chaque pièce de rechange (5), une butée de positionnement (6) opérante dans le sens de l'insertion.

7. Roue Turas selon la revendication 1, **caractérisée en ce que** les pièces de rechange (5) sont reliées monobloc les unes avec les autres.
